# EUROPEAN PATENT APPLICATION

(11) **EP 0 786 330 A2**
(43) Date of publication of application: **30.07.1997**
(21) Application number: 97300475.7
(22) Date of filing: 27.01.1997
(51) Int. Cl.: B32B 3/12, B32B 27/12, B29C 70/48

(54) **Low-weight and water-resistant honeycomb sandwich panels made by resin transfer molding process**

(30) Priority: 29.01.1996 US 10783
(71) Applicant: HEXCEL CORPORATION, Pleasanton, CA 94588-8781 (US)
(72) Inventor: Thiede-Smet, Mark D., c/o Heath Tecna, Kent, WA 98031-1298 (US); Stewart, Jeffrey A., c/o Heath Tecna, Kent, WA 98031-1298 (US); Johnston, David Wayne, c/o Heath Tecna, Kent, WA 98031-1298 (US)
(74) Representative: Baillie, Iain Cameron

(57) **Abstract**

The instant invention pertains to a low-weight and water-resistant composite panel made from an open cell core, such as honeycomb, using the resin transfer molding (RTM) process. The open cell core is sealed to a degree of at least 95 %, and even up to 100 %, by use of a resin/moisture barrier before the liquid resin is injected into the fibrous reinforcement This prevents resin fill into the open cell core during the RTM process and isolates the core from water migration after the structure is put into service.

## Description

This invention relates to a low-weight and water-resistant composite panel made from an open cell core, such as honeycomb, using the resin transfer molding (RTM) process with the aid of a resin/moisture barrier to prevent fill of the open cell core as well as preventing water migration into the core after the panel is put into service.

### Background of the Invention

Current sandwich structures used in the aircraft industry are made from closed cell cores (including closed cell foam, syntactic foam and balsa wood) using the resin transfer molding (RTM) process. The RTM process is generally understood in the art to be a process for manufacturing polymer composite structures wherein a dry fibrous reinforcement, with or without core material, is placed in a mold, the mold is closed, and liquid resin is injected into the fibrous reinforcement, followed by curing the resin at elevated temperatures. The resulting panel structure may then be removed from the mold. The RTM process is described for example in the Handbook of Composites, edited by George Lubin, p. 446 (1982); and in a conference publication by the Society of Manufacturing Engineers, namely Resin Transfer Molding for the Aerospace Industry, March 5-6, 1991, both references incorporated herein by reference.

The closed cell core materials substantially increase the weight of the panel and lack durability, strength and high temperature resistance, all of which are undesirable characteristics for aircraft structures for which high resistance to compressive forces and a minimum weight are most beneficial. Examples of closed cell core materials are given in U.S. Patent No. 5,569,508.

Many attempts have been made to solve the above-mentioned problems. For example, the use of an open-cell core in the RTM process (such as honeycomb) is known in the art. However, the open cell core fills with liquid resin upon injection of the liquid resin into the dry fibrous reinforcement. This open cell core fill results in an unacceptably heavy and weaker panel on a strength to weight basis. Further, the open cell core of these known panels has a tendency to fill with water due to seepage of moisture, especially upon damage to the composite skins during normal use of the panel. Water-fill not only substantially and unacceptably increases the panel weight, but also requires that the panel be replaced at great cost and inconvenience.

European Patent No. 557,612 discloses a process for producing radomes which are protected from rain erosion and which have a thermosetting resin base with a thermoplastic rain erosion top coating. This process involves placing the base structure (preferably an uncured prepreg) and top coating, which has been surface activated, for example, by a plasma or electron radiation, into a mold, infiltrating a mixture of resin and hardener into the mold and curing the resulting assembly.

The article "RTM and Core Materials Offer Product Advances", by Karen Fisher from High Performance Composites (Sept./Oct. 1995), discloses that a foam film membrane precursor wrap of the honeycomb core may be used in order to prevent resin intrusion into the open honeycomb cell cores during the RTM process. For example, SynSpand®, available from Dexter Aerospace Materials Div., has been employed for this purpose. SynSpand® is a closed cell expandable syntactic film that can be expanded into the honeycomb. The article further discloses a polyurethane foam-filled honeycomb product made of kraft paper with phenolic coating. The foam fills the spaces in the honeycomb, preventing resin intrusion. These expandable foam techniques fill the honeycomb core to displace injected resin and do not act as a seal or moisture barrier. Moreover, these foams add unnecessary weight to the final panel.

While the aforementioned techniques are moderately successful in solving the problem of resin fill, the need for improvement in this art remains since an appreciable amount of resin intrusion is still encountered. As explained hereinabove, this resin fill has drawbacks particularly in the aerospace industry.

U.S. Patent No. 5,567,499 discloses a process for making a layered product having a honeycomb core having empty cells having as the first few steps application of a layer of an uncured adhesive film on the top and bottom sides of the honeycomb core, followed by application of a layer of an uncured prepreg material, and then heating to cure the adhesive and prepreg materials. With this process are associated several disadvantages or limitations, namely said process potentially limits the size of the parts made therefrom, adds thickness due to the presence of prepreg layers, complicates splicing of multiple sheets of adhesive and prepreg materials, requires that a prepreg and adhesive be used which have the same cure temperature, and requires an added curing step. Further, the prepreg material does not act as a resin/moisture barrier film, thereby indicating that some resin fill during the RTM process will likely occur and will severely limit process options (i.e., RTM resin choices, prepreg weaves, processing temperatures and pressures). The foregoing drawbacks and limitations are overcome by the honeycomb panels produced in accordance with the instant invention.

Surprisingly, it has now been found that resin fill of the open cell core can be eliminated or substantially eliminated in accordance with the instant invention. In the present invention, the open cell core is consistently sealed to a degree greater than 95 %, and even up to 100 %, by use of a resinous barrier before the liquid resin is injected into the fibrous reinforcement during the RTM process. Thereby, the liquid resin is prevented from entering the open cell core, resulting in a lighter weight and stronger panel. The seal further serves the purpose of acting as an integral moisture barrier within the panel, thereby protecting the open cell core from filling with water during normal use. Panels made in accordance with the instant invention thus result in a longer service life since the need for panel replacement is substantially decreased.

### Summary of the Invention

This invention pertains to a low-weight and water resistant panel made from an open cell core, such as honeycomb, using the resin transfer molding (RTM) process. The open cell core is sealed against resin fill by a resin/moisture barrier before the liquid resin is injected into the fibrous reinforcement. Sealing of the core in accordance with the instant invention prevents greater than 95 %, preferably 99.5 % and even 99.9 % or 100 %, of the open cell cores from being filled with the liquid resin.

More particularly, the instant invention relates to an open cell core sandwich structure produced by the resin transfer molding (RTM) process, which structure comprises an open cell core which is sealed to a degree greater than 95 % against resin fill during the RTM process by a resin/moisture barrier film comprised of a polymeric film which gives a flatwise tensile strength of from 10 psi to 800 psi and which has a melt temperature of from 25°F to 800°F, wherein the open cell core is bonded to the resin/moisture barrier film by a film adhesive.

Further, the instant invention relates to a process for the production of an open cell core sandwich structure using the resin transfer molding (RTM), which process comprises:
(a) applying a layer of an adhesive film to a resin/moisture barrier film comprised of a polymeric film which gives a flatwise tensile strength of from 10 psi to 800 psi and which has a melt temperature of from 25°F to 800°F;
(b) surrounding an open cell core material with the resin/moisture barrier film, adhesive film assembly, wherein the adhesive film side is facing the open cell material; and
(c) performing resin transfer molding by
   (i) positioning the film-covered open cell core material into a mold and surrounding said film-covered open cell core material with a dry fibrous reinforcement material; and
   (ii) injecting a liquid resin into the dry fibrous reinforcement material,
wherein the barrier film is sealed to the open cell core such that a greater than 95 % seal against resin fill during the RTM process is formed.

Typically, the resin/moisture barrier, adhesive film double layer is bonded and sealed to the open cell core by heating the assembly to effectuate cure of the adhesive, particularly when such adhesive comprises a thermosetting resin. The exact temperature depends upon the nature of the film adhesive resin itself as well as the desired amount of cure. Both thermoset and thermoplastic film adhesives can be used. Typically, a thermoplastic film adhesive can be directly calendared to the resin/moisture barrier film and then adhered to the honeycomb using a heating device, such as an iron or heat sealing bar.

The preferred embodiments of the instant invention will become apparent from the more detailed description provided infra.

### Brief Description of the Drawings

Details of the invention and the preferred embodiments thereof will be further understood upon reference to the drawings wherein:
FIG. 1 is a vertical schematic view through the instant panel;

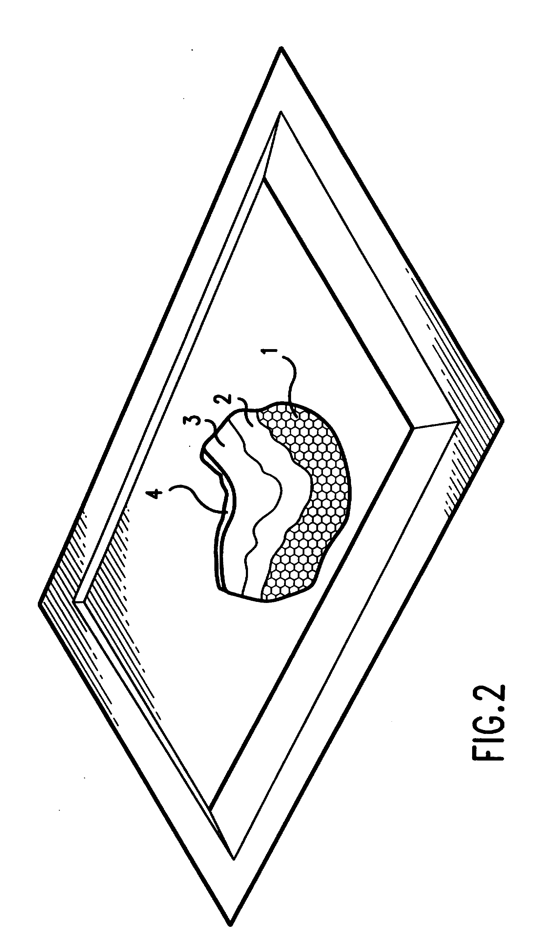

FIG. 2 is a perspective view, partially cut away, of the instant hybrid sandwich panel; and
FIG. 3 is a cross-section through the sandwich structure showing the placement of each material along with core ramp stabilization and edge sealing details.

### Detailed Description

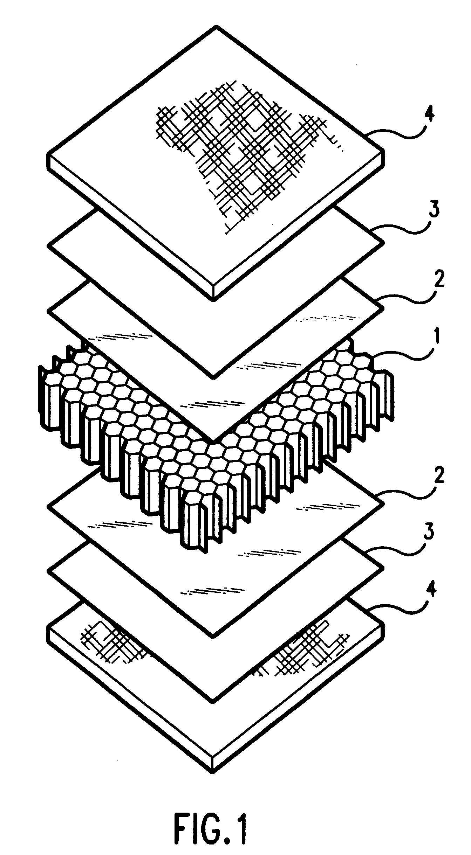

The present invention pertains to a honeycomb sandwich structure as seen in FIG. **1** with an open cell core layer **1** sandwiched progressively between two resin/moisture barrier film layers **3** and two fibrous reinforcement layers **4**. Preferably, the open cell layer **1** is comprised of a honeycomb structure, which is preferably made of either aluminum or a paper composed of thermoplastic fiber such as NOMEX® (aramid, fiber, E.I. duPont de Nemours & Co., Wilmington, DE). Other suitable open cell core materials include polyimide foam, phenolic foam and polyisocyanurate. The cell size, cell wall thickness and mass density of the open cell core layer **1** are chosen to meet the desired mechanical requirement for indentation resistance.

The resin/moisture barrier film layers **3** are bonded to the open cell core layer **1** preferably by film adhesive layers **2** which are comprised of a thermosetting resin or a thermoplastic resin. Suitable thermosetting resins include those which do not degrade at or below the injection and cure temperature of the RTM resin. Suitable thermoplastic resins include those with a melt temperature above the injection temperature of the RTM resin and cure temperature thereof. Some thermoplastic resins with a high melt temperature include polyetheretherketone, polyphenylene sulfide, polyamide-imide, polyetherimide, polysulfone, polybutadiene, polyethylene, polypropylene, polybutylene, polyvinyl chloride, polyvinyl chloride acetate. Preferably, the film adhesive is comprised of a thermosetting resin which is advantageously selected from the group consisting of an epoxy resin, bismaleimide resin, polyimide resin, polyester resin, phenolic resin, vinyl ester resin, or cyanate ester resin, or mixtures thereof.

The resin/moisture barrier film layer **3** typically has a thickness of from 0.001 to 0.003 inch and is comprised of polymeric film which gives a flatwise tensile strength of between 10 psi and 800 psi and which has a melt temperature of between 25°F and 800°F, preferably a flatwise tensile strength of about 600 psi and a film melt temperature of between 150° and 800°F (most preferably between about 350° and 800°F). It is understood that suitable polymeric materials from which to make the resin/moisture barrier layer include those which have a melt temperature and are stable above the injection and cure temperature of the RTM resin. Preferably, the resin/moisture barrier film is comprised of a polymeric film selected from the group consisting of a fluorinated polymer, polyimide, polyether, polyester, polyetheretherketone, polyetherimide, polyethersulfone, polyamide and polyolefin, or mixtures thereof. Among these classes of polymers, fluorinated polymer, polyimide, polyetheretherketone, polyetherimide, or mixtures thereof, are preferred. Typical examples of a fluorinated polymer include polytetrafluoroethylene (Teflon® ) and polyvinyl fluoride (Tedlar® from E.I. DuPont de Nemours & Co., Wilmington, DE); of a polyetherimide include poly[(5,7-dihydro-1,3,5,7-tetraoxobenzo[1,2-c:4,5-c']dipyrrole-2,6(1H,3H)-diyl)1,4-phenyleneoxy-1,4-phenylene] (Kapton®, E.I. DuPont de Nemours & Co., Wilmington, DE); of a polyether include polyether-ether ketones such as PEEK available from Imperial Chemical Industries, Inc.; and of a polyester include poly(oxy-1,2-ethanediyloxycarbonyl-1,4-phenylene-carbonyl) (Mylar® from E.I. Dupont de Nemours & Co. Wilmington, DE). The most effective among these are the fluorinated polymers (particularly Tedlar®) and the polyimides (particularly Kapton®), with the former being the most preferred. Said layers **2** and **3** are selected for their ability to seal the open cell core layer **1** against resin fill during the RTM process to a degree greater than 95 %, preferably 99.5 % and even 100 %, as well as their ability to prevent moisture fill.

The fibrous reinforcement layers **4** are preferably comprised of carbon fiber, glass fiber, Kevlar® fiber, polyester fiber or spectra fiber, and are filled with resin during the RTM process. Typical fill resins include, but not limited to epoxy, bismaleimide, polyimide, cyanate ester, vinyl ester, polyester and phenolic resins, or mixtures thereof. The layers **4** and the fill resin are selected for their ability to increase the toughness of the composite structure and to minimize stress concentrations.

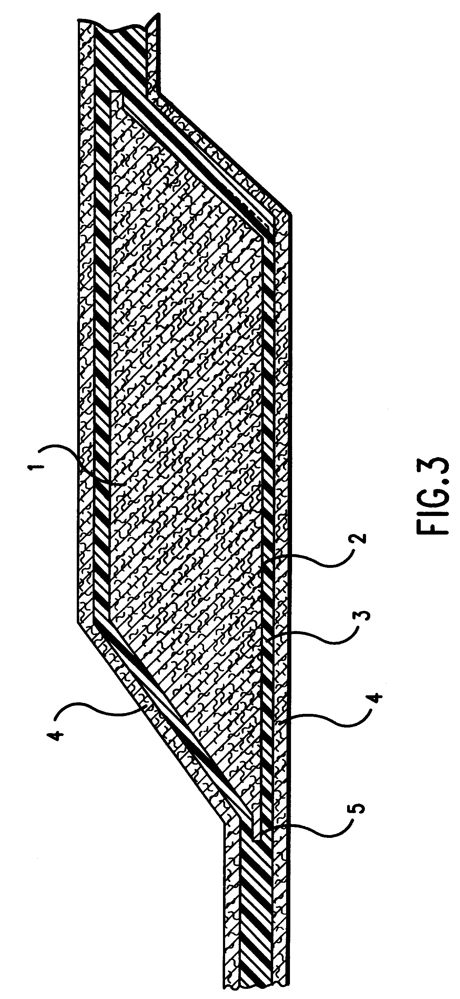

FIG. 3 is illustrative of the preferred technique for applying/wrapping the honeycomb with the film adhesive and resin/moisture barrier film. In one particularly advantageous embodiment of the instant invention, a subassembly or double layer consisting of the adhesive film and the resin/moisture barrier layer is first prepared. Using a heated iron to achieve tack, the double layer **2** and **3** is used to cover a precut honeycomb core such that the adhesive side is toward the honeycomb core **1**. Cutting, darting and overlap splices are used where necessary to completely cover or wrap the honeycomb core in corners and in curves. A tab at the junction of two pieces of double layer is formed by ironing the pieces together that extend beyond the edge of the core, then trimming off the excess, leaving a tab **5**. The fibrous reinforcement layers **4** are applied in the usual manner.

The following examples are presented for the purposes of illustration only and are not to be construed as limiting the nature or scope of the instant invention in any manner whatsoever.

### Examples 1-3

These Examples illustrate typical panels assembled in accordance with the instant invention.

A modified epoxy film adhesive (FM 300K Adhesive Film 0.05 weight from Cytec Industries) is applied to the resin/moisture barrier film. Using a heated iron to achieve tack, the resulting film assembly is used to cover a precut honeycomb core of NOMEX® (9 lb/ft³) such that the adhesive side is toward the honeycomb core. Cutting, darting and overlap splices are used where necessary to completely cover or wrap the honeycomb core.

The RTM process is then carried out using the wrapped honeycomb. A fibrous reinforcement is placed in the RTM mold, followed by the honeycomb core wrapped in the adhesive/resin/moisture barrier film assembly and a second fibrous reinforcement. The RTM mold is closed, sealed and heated to the injection temperature (265°F) of the RTM resin for a period of time sufficient to bond the film adhesive to the core. Vacuum is drawn on the fibrous reinforcement (3mm Hg) followed by injection therein of the RTM resin (RTM 6 epoxy resin from Hexcel Composites). The mold is heated to cure the resin, after which time it is cooled and opened to remove the resulting panel.

### Materials Used

| Example | Barrier Film/Thickness (inch) |
|---|---|
| 1 | Tedlar® TMB20BE3¹/0.002 |
| 2 | Tedlar® TGY20BE3¹/0.002 |
| 3 | Kapton® 200HN²/0.002 |

| | |
|---|---|
| ^{1.}Tedlar® products are polyvinyl fluoride polymers available from E.I. DuPont de Nemours & Co., Wilmington, DE. | |
| ^{2.}Kapton® products are polyimide polymers available from E.I. DePont de Nemours & Co., Wilmington, DE. | |

### Example 4

The flatwise tensile strength of the honeycomb panels assembled in accordance with Examples 1-3 are tested in accordance with the standard ASTM C297 (European Test Specification ABP6-218). The results are summarized in Table 1. A higher Flatwise Tensile Strength value is indicative of better strength and more resistance to compression.

**Table 1**

| Panel of Example | Flatwise Tensile Strength (mean) |
|---|---|
| 1 | 636 psi |
| 2 | 577 psi |
| 3 | 614 psi |

### Example 5

The seal of the open cell core against resin fill during the RTM process is measured by visual inspection of X-ray photographs of the honeycomb sandwich panels assembled in accordance with Examples 1-3. The results are given in Table 2.

**Table 2**

| Panel of Example | Seal Against Resin Fill (%) |
|---|---|
| 1 | 100 |
| 2 | 100 |
| 3 | 100 |

## Claims

1. A composite sandwich structure produced by the resin transfer molding (RTM) process, which structure comprises an open cell core which is sealed to a degree greater than 95% against resin fill during the RTM process by a resin/moisture barrier film comprised of a polymeric film which gives a flatwise tensile strength of from 10 psi to 800 psi and has a melt temperature of from 25°F to 800°F, said resin/moisture barrier film being bonded to the open cell by a film adhesive.

2. A composite sandwich structure according to claim 1, wherein the open cell core is honeycomb.

3. A composite sandwich structure according to either of claims 1 and 2, wherein the polymeric film comprising the resin/moisture barrier film is selected from a fluorinated polymer, polyimide, polyetheretherketone and polyetherimide, or mixtures thereof.

4. A composite sandwich structure according to claim 3, wherein the polymeric film is polyvinyl fluoride or poly[(5,7-Dihydro-1,3,5,7-tetraoxobenzo[1,2-c:4,5-c']-dipyrrole-2,6(1H,3H)-diyl)1,4-phenyleneoxyl,4-phenylene].

5. A composite sandwich structure according to any one of claims 1 to 4, wherein the film adhesive comprises a thermosetting resin.

6. A composite sandwich structure according to claim 5, wherein the thermosetting resin of the adhesive film is selected from an epoxy resin, bismaleimide resin, polyimide resin, polyester resin, phenolic resin, vinyl ester resin, or cyanate ester resin, or mixtures thereof.

7. A composite sandwich structure according to any one of claims 1 to 6, wherein the open cell core is sealed against resin fill during the RTM to a degree which is greater than 99.5%.

8. A process for the production of a composite sandwich structure using the resin transfer molding (RTM), which process comprises:
(a) applying a layer of an adhesive film to a resin/moisture barrier film comprised of a polymeric film which gives a flatwise tensile strength of from 10 psi to 800 psi and has melt temperature of from 25°F to 800°F;
(b) surrounding an open cell core material with the resin/moisture barrier film, adhesive film assembly, wherein the adhesive film side is facing the open cell material; and
(c) performing resin transfer molding by:
(i) positioning the film-covered open cell core material into a mold and surrounding said film-covered open cell core material with a dry fibrous reinforcement material; and
(ii) injecting a liquid resin into the dry fibrous reinforcement material,
wherein the barrier film is sealed to the open cell core such that a greater than 95% seal against resin fill during the RTM process is formed.

9. A process according to claim 8, wherein the open cell core material is honeycomb core.

10. A process according to either of claims 8 or 9, wherein the polymeric film comprising the resin/moisture film is selected from fluorinated polymer, polyimide, polyetheretherketone and polyetherimide, or mixtures thereof.

11. A process according to claim 10, wherein the polymeric film comprising the resin/moisture barrier film is polyvinyl fluoride or poly[(5,7-dihydro-1,3,5,7-tetraoxobenzo[1,2-c:4,5-c']dipyrro1e-2,6(1H,3H)-diyl)1,4-phenyleneoxy-1,4-phenylene].

12. A process according to any one of claims 8 to 11, wherein the barrier film is sealed to the open cell core by heating the mold to a sufficient temperature to effectuate the seal.

13. A process according to claim 12, wherein the adhesive film is a thermosetting resin selected from an epoxy resin, bismaleimide resin, polyimide resin, polyester resin, phenolic resin, vinyl ester resin, or cyanate ester resin, or mixtures thereof.

14. A process according to any one of claims 8 to 13, wherein the open cell core is sealed against resin fill during the RTM process to a degree greater than 99.5%.

15. A process according to any one of claims 8 to 14, further comprising a curing step after the liquid resin is injected into the dry fibrous reinforcement material.
